# EUROPEAN PATENT APPLICATION

(11) **EP 1 256 868 A2**
(43) Date of publication of application: **13.11.2002**
(21) Application number: 02252831.9
(22) Date of filing: 23.04.2002
(51) Int. Cl.: G06F 1/16

(54) **Grip for latching a cover to a receptacle**

(30) Priority: 03.05.2001 US 848401
(71) Applicant: Hewlett-Packard Company, Palo Alto, CA 94304 (US)
(72) Inventor: Singleton, Charles W., Jr., Corvallis, OR 97330 (US); Bliven, Robert P., Corvallis, OR 97330 (US); Yin, Memphis Zhihong, Corvallis, OR 97330 (US); Derocher, Michael D., Corvallis, OR 97330 (US); Esterberg, Dennis R., Philomath, OR 97370 (US)
(74) Representative: Jackson, Richard Eric

(57) **Abstract**

A grip (30) is used to communicate force between a digit, such as a user's finger or thumb, to a receiver (35). The grip (30) includes a first tab (50) that inserts into a first end portion (90) of the receiver (35). The grip (30) further includes a second tab (60) that inserts into a second end portion (100) of the receiver (35). The second end (100) portion may be substantially opposite the first end portion (100). Further, the grip (30) includes a depression that is formed into an area between the first and second portions (90, 100) wherein the depression (47) is formed to accord with the user's digit.

## Description

### BACKGROUND OF THE INVENTION

The invention relates generally to the field of latching devices and, more particularly, to devices used to latch a cover to a receptacle.

In a portable computing unit, a latch is often used to secure the cover of the computing unit to another portion of the unit. Generally, the design of the latch is optimized to provide secure fastening of the cover to a receptacle located at another location on the computing unit while requiring only minimal effort to latch and unlatch the cover from the unit. Thus, a favorable latch design represents a balance between secure fastening and ergonomic design that assists in the unlatching and lifting of the cover.

When a user begins a session using a portable computing unit, the user's first experience with the unit can be the unlatching of the cover from the computing unit. Thus, the design of the latching and unlatching mechanism can be an important aspect of the overall user experience. If this first experience of the user interacting with the latch is marginal, the entire experience of using the portable computing unit can be tainted. Therefore, it is desirable for the latch to securely fasten to the lid to the body of the computing unit while allowing the user to easily and effortlessly open the cover of the computing unit.

### SUMMARY

The invention is pointed out with particularity in the appended claims. However, at least some important aspects of the invention are summarized in this section.

In one aspect of the invention, a latching device for securing a cover to a receptacle is disclosed. The latching device includes a grip that is shaped to generally accord with the shape of either a user's finger or thumb. The latching device also includes a receiver attached to a cover, for retaining the grip and communicating force from the user's finger or thumb to a pivot. A hook is coupled to the pivot that latches the cover to a receptacle.

In another aspect of the invention, a grip that communicates force between a user's digit, such as a finger or thumb, to a receiver is disclosed. The grip includes a first tab that inserts into a first end portion of the receiver. A second tab is included which inserts into a second end portion of the receiver, in which the second end portion of the receiver is substantially opposite the first end portion. A depression is formed into an area between the first and second end portions, with the depression being formed to accord with the digits.

### BRIEF DESCRIPTION OF THE DRAWINGS

The invention is pointed out with particularity in the appended claims. However, a more complete understanding of the invention may be gained by reading the description herein, in conjunction with the figures, in which like reference numerals refer to like elements throughout the figures, and:
Figure 1 shows an exemplary computing unit that includes a grip, latching device, and receptacle that operate in accordance with a preferred embodiment of the invention;
Figure 2 shows the latching device of the computing unit of Figure 1 in greater detail in accordance with a preferred embodiment of the invention;
Figure 3 shows a more detailed view of the latching device of Figures 1 and 2, showing the grip surrounded by a receiver in accordance with a preferred embodiment of the invention;
Figure 4 is an illustration of the grip of Figure 3 in accordance with a preferred embodiment of the invention;
Figure 5 is rear view of the grip of Figure 4 in accordance with a preferred embodiment of the invention;
Figure 6 is a view of the receiver of Figure 3 in accordance with a preferred embodiment of the invention; and
Figure 7 is a flow diagram of a method performed by a grip, latching device, and a receiver in accordance with a preferred embodiment of the invention,

### DESCRIPTION OF THE PREFERRED EMBODIMENTS

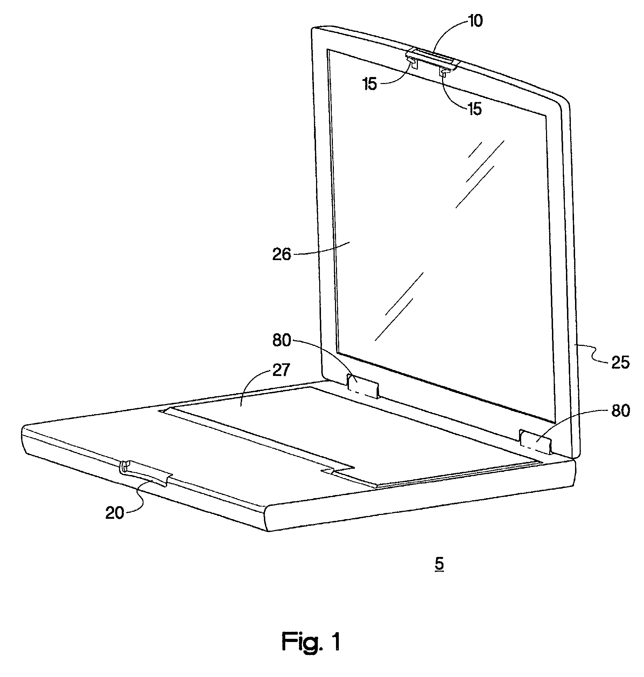

Figure 1 shows an exemplary computing unit that includes a grip, latching device, and receptacle that operates in accordance with a preferred embodiment of the invention. In Figure 1, computing unit 5 includes latching device 10 coupled to hooks 15, which insert into receptacle 20 when first surface 26 is brought into contact with second surface 27. Preferably, hinges 80 enable cover 25, coupled to first surface 26, to rotate between a closed position and an open position shown in Figure 1. Preferably, cover 25 includes a display within first surface 26 for displaying information to the user. It should be pointed out that although the exemplary embodiment of Figure 1 resembles a portable laptop computing unit, nothing prevents the use of the inventive principles in a variety of other applications, such as handheld computing units, handheld entertainment units, and other systems in which a cover, such as cover 25, is hingedly coupled to a second portion of the unit, such as second surface 27. Further, a more detailed view of the grip, latching device, and receptacle are provided in subsequent figures herein.

Desirably, a user of the computing unit (5) of Figure 1 operates the computing unit in the open position. This position is enabled by way of the user a placing at least one digit, such as a thumb or finger, into contact with latching device 10 and sliding the device appropriately in order to actuate hooks 15. When hooks 15 are actuated, they are moved out of contact with receptacle 20, thereby enabling the rotation of cover 25 about hinges 80 to the open position shown.

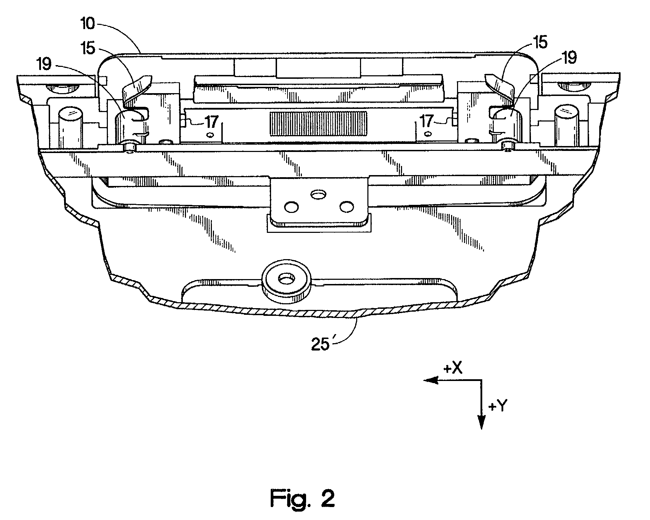

Figure 2 shows the latching device (10) of the computing unit of Figure 1 in greater detail in accordance with a preferred embodiment of the invention. In Figure 2, the display portion of cover 25 has been removed in order to more clearly illustrate the operation of latching device 10 within the environment of cover 25'. According to Figure 2, the movement of latching device 10 in the +y direction causes shafts 17, coupled to latching device 10, to rotate hooks 15 about pivots 19. As hooks 15 are pulled inward along the "x" axis the hooks are brought out of contact with a receptacle, such as receptacle 20 of Figure 1. When hooks 15 are brought out of contact with receptacle 20, cover 25 (of Figure 1) can be opened. In alternate embodiments, a notch can replace receptacle 20 and hooks 15 can be representative of any other type of retaining element.

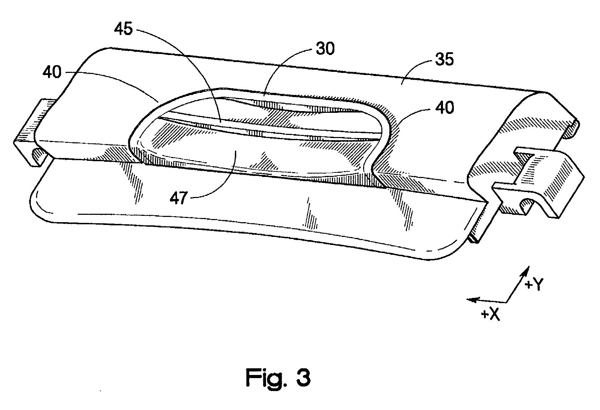

Figure 3 shows a more detailed view of the latching device of Figures 1 and 2, showing the grip surrounded by a receiver in accordance with a preferred embodiment of the invention. In Figure 3, a receiver 35 substantially surrounds grip 30. Preferably, grip 30 is formed using a pliant material such as a soft elastomeric plastic material such as silicone rubber. Although the use of a soft elastomeric material is preferred, nothing prevents the use of a less soft material in particular applications. However, a substantially pliant material is used in this example in order to provide a soft surface that enables the user's finger or thumb to easily manipulate grip 30 and move the grip and receiver combination in a "+y" direction.

As previously mentioned, nothing prevents the use of less pliant materials in the construction of grip 30. Thus, grip 30 can be constructed using a more rigid material, using other elastomeric materials, such as urethane. However, regardless of the material chosen, it is preferable that the selected material be more pliant than the surrounding structure, such as receiver 35 for the example of Figure 3.

As shown in Figure 3, ridge 45 runs substantially perpendicular to the "+y" direction. Ridge 45, located within depression 47, provides increased traction to the user's finger or thumb, thereby minimizing the force which the user need apply to grip 30 in order to manipulate the combination of grip 30 within receiver 35. Additional ridges, running in a direction that is parallel to ridge 45 can be used to further increase the traction of grip 30. Further, in order to permit the user's finger or thumb to fit securely within depression 47 of grip 30, periphery 40 of the grip rises to a height commensurate with the height of receiver 35.

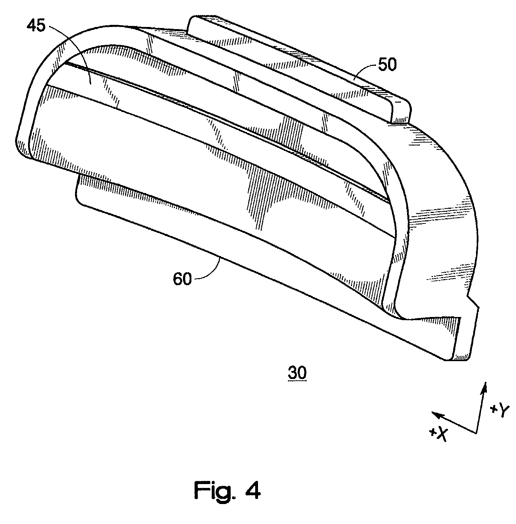

Figure 4 is an illustration of the grip of Figure 3 in accordance with a preferred embodiment of the invention. In Figure 4, first tab 50 and second tab 60 enable grip 30 to be inserted into a receiver, such as receiver 35 of Figure 3. Thus, grip 30 is preferably inserted into a suitable receiver by appropriately compressing the grip in the "+y" dimension to insert the grip into the receiver. The use of first and second tabs 50 and 60 provides a means of inserting grip 30 into the receiver without requiring the use of an adhesive. Grip 30 desirably communicates forces exerted by the user to receiver 35.

In view of the embodiments of Figures 2-4, those skilled in the art can envision alternate embodiments in which the pliant character of grip 30 is exploited in order to fit grip 3 0 into place within receiver 3 5.

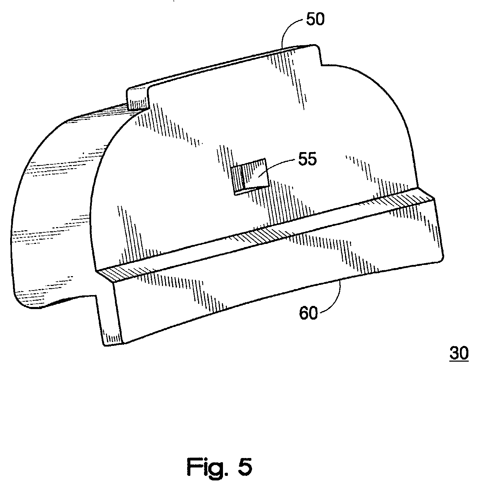

Figure 5 is rear view of the grip of Figure 4 in accordance with a preferred embodiment of the invention. Figure 5 shows first and second tabs 50 and 60 as well as indent 55. Indent 55 provides a cavity that is suitable for accommodating a protrusion originating from receiver 35, thereby further restricting the movement of grip 30 within receiver 35 and allowing the grip to move in concert with the receiver.

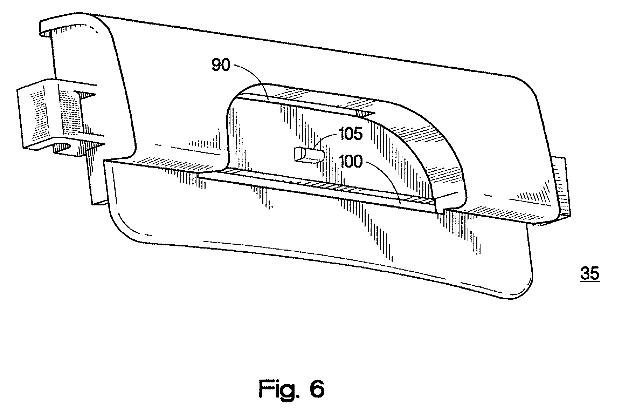

Figure 6 is a view of the receiver of Figure 3 in accordance with a preferred embodiment of the invention. In Figure 6, first end portion 90 accepts first tab 50 of grip 30 of Figure 4. In a similar manner, second end portion 100, opposite first end portion 90, accepts second tab 60 the grip. Further, protrusion 105 is shown near the center, at an area between first and second end portions 90 and 100, respectively.

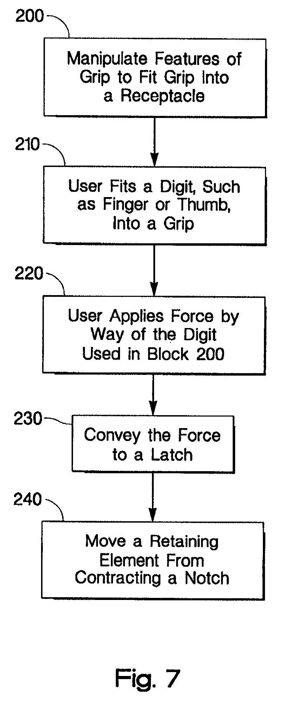

Figure 7 is a flow diagram of a method performed by a grip, latching device, and a receiver in accordance with a preferred embodiment of the invention. The apparatus of Figure 1 is suitable for performing the method. At block 200, features of the grip, such as first and second tabs, are manipulated to fit the grip into a receptacle. At block 2 10, a user fits a digit, such as finger or thumb, into a grip. Desirably, the grip used in block 2 10 conforms to the shape of the digit. The method continues a block 220, in which the user applies force by way of the digit used in block 210. The force applied in block 220 is preferably along a direction that is substantially tangential to a surface of the grip. At block 230, the grip conveys the force to a latch. Block 230 can further include conveying force to a receiver that, in turn, applies the force to a pivot that functions to actuate the latch. In block 240 the latch moves a retaining element from contacting a notch, thereby releasing the cover of the electronic or computer unit.

The foregoing description of the specific embodiments will so fully reveal the general nature of the invention that others can, by applying current knowledge, readily modify and/or adapt for various applications such specific embodiments without departing from the generic concept, and therefore such adaptations and modifications should and are intended to be comprehended within the meaning and range of equivalents of the disclosed embodiments.

It should be understood that the phraseology or terminology employed herein is for the purpose of description and not of limitation. Accordingly, the invention is intended to embrace all such alternatives, modifications, equivalents and variations as fall within the spirit and broad scope of the appended claims.

## Claims

1. A latching device (10) for securing a cover (25) to a receptacle (20), comprising:
a grip (30) shaped to accord with the shape of one of a finger and a thumb;
a receiver (35), attached to said cover (25), for retaining said grip (30) and communicating force from said one of said finger and said thumb to a pivot (19); and
a hook (15), coupled to said pivot (19), for latching said cover (25) to said receptacle (20).

2. The latching device (10) of claim 1 wherein said grip (30) is shaped to accord with the shape of a thumb.

3. The latching device (10) of claim 1 wherein said grip (30) is constructed using a pliant material.

4. The latching device (10) of claim 3 wherein said grip (30) is constructed using silicone rubber.

5. The latching device (10) of claim 1 wherein said grip (30) includes at least one ridge (45) that runs substantially perpendicular to the direction of said force exerted by said one of said finger and said thumb.

6. A grip (30) used to communicate a force between a digit and a receiver (35), comprising:
a first tab (50) that inserts into a first end portion (90) of said receiver;
a second tab (60) that inserts into a second end portion (100) of said receiver (35), said second end portion (100) being substantially opposite of said first end portion (90); and
a depression (47) formed into an area between said first and second end portions (90, 100), said depression (47) being formed to accord with said digit.

7. The grip of claim 6 wherein said depression (47) further includes at least one ridge (45) that runs perpendicular to the direction of said force.

8. The grip of claim 6 wherein said grip (30) is constructed using an elastomeric material.

9. The grip of claim 8 wherein the periphery of said depression (47) is of a height similar to that of said receiver (35).

10. A portable computing unit (5) having first surface (23) hingedly coupled to, and occasionally becoming proximate with, a second surface (27) of said portable computing unit (5), said portable computing unit (5) comprising:
a grip (30), coupled to said first surface (23), said grip (30) being shaped to agree with the shape of a user's thumb;
a receiver (35), connected to said first surface (23), for retaining said grip (30) and communicating force from said user's thumb to a shaft (17); and
a hook (15), coupled to said shaft (17), for occasionally latching said first surface (23) to said second surface (26).
